# EUROPEAN PATENT SPECIFICATION

(11) **EP 0 780 194 B1**
(45) Date of publication and mention of the grant of the patent: **21.11.2001**
(21) Application number: 96309260.6
(22) Date of filing: 18.12.1996
(51) Int. Cl.: B23Q 11/06, B27B 5/16, B23D 59/00, B23Q 11/00

(54) **A chop/table saw arrangement**
Kappsägevorrichtung
Agencement de scie pivotante

(30) Priority: 22.12.1995 GB 9526368
(43) Date of publication of application: 25.06.1997
(73) Proprietor: Black & Decker Inc., Newark Delaware 19711 (US)
(72) Inventor: Garuglieri, Andrea, Colle Brianza (Como) (IT)
(74) Representative: Dlugosz, Anthony Charles

(56) References cited:
- EP-A- 0 502 350
- EP-A- 0 586 172
- DE-B- 2 908 211
- DE-U- 9 420 880

## Description

This invention relates to circular saws of the type comprising a table, a pivot member on the table and a saw assembly pivoted about a pivot axis with respect to the pivot member, whereby said saw assembly carrying a motor driven blade can be plunged into a workpiece supported on the table.

Such saws are known and described in published patent documents such as EP-0133666 and EP-0450400. These saws are useful and have numerous possibilities for enhancement to improve the capacity, capability and efficiency not to mention cleanliness and safety of their arrangements. On the other hand, all these features add complexity and cost, and may render the saw user unfriendly.

The present invention particularly relates to saws of the type described above but which in addition have the table mounted in a frame such that the table may be inverted, as by pivoting about an axis, so that the saw assembly is then beneath the table. The table is in addition provided with a slot so that the blade can protrude through the slot to render the saw a bench or table saw. Such saws are known and described in DE-1628992, EP-0502350 and EP-0586172.

A saw comprising the features of the preamble of claim 1 is known from EP-A-586 172.

Both EP-0133666 and EP-0450400 mentioned above describe saws in which the saw assembly comprises an upper guard and a lower guard for the blade. The upper guard is formed from the housing of the assembly and permanently covers a top part of the blade. A bottom part of the blade is covered by the lower guard but this must be withdrawn in use so that the blade is exposed when required to perform cutting operations.

A handle is disposed on the upper guard by means of which a user can pivot the saw assembly up and down to perform cutting operations on a workpiece supported on the table. Further, if the table has a rotational portion carrying the saw assembly, mitre cuts can also be made in a workpiece on the table.

The lower guard may be opened entirely by an actuating lever disposed on the handle. Alternatively the guard may be opened automatically by pivoting of the saw assembly, there being provided a connection between the guard and the pivot member for this purpose. A further alternative is that the guard may be opened partly by either of these arrangements and only further opened by direct contact with a workpiece.

Means must be provided to bias the saw assembly to a raised upright position when it is at rest so that the user is not required to lift the not-insignificant weight of the saw assembly after completing a plunge cut. Such means is normally in the form of a powerful spring.

Although the upper and lower guards mentioned above provide satisfactory protection for the saw blade when the saw assembly is acting as a plunge or mitre saw, when the table is flipped-over to convert the saw into a bench saw the saw blade is once again exposed. In this configuration, a separate guard must be provided which, in the past, has been mounted on a riving knife of the bench saw each time the saw is used as a bench saw. This is clearly not satisfactory, not least because many users may simply not bother to attach the guard to the riving knife and will proceed to use the bench saw without any guard in place. Further, if the guard is simply mounted on the riving knife, the guard may obstruct motion of a workpiece past the blade and riving knife during use. Furthermore, the guard may simply pivot about a pivot axis on the riving knife rather than being held in a constant orientation relative to the table surface during lifting.

In view of the foregoing, the present invention aims to improve upon the prior art saws known to the applicant by providing a chop/table saw arrangement including an improved guard when the saw is being used as a table saw, which guard also acts as a dust collector during use as a chop saw.

According to the present invention there is provided a saw comprising a frame, a table mounted in the frame and adapted to adopt two positions, a pivot member on a first side of the table, a saw assembly pivoted with respect to the pivot member, a blade journalled in said assembly, a motor to drive the blade, and a slot in the table through which said blade is adapted to protrude, in a first of said two positions of the table the saw assembly being above the table, the saw thereby forming a chop saw for performing plunge cuts on workpieces supported on said first side of the table, and, in a second of said two positions of the table, the saw assembly being below the table and the saw thereby forming a bench saw for performing cuts on workpieces passed through the blade on a second side of the table, characterised in that the saw further comprises a guard which, when the table is in the second of the two positions, protects a user from the blade protruding through the slot and, when the table is in the first of the two positions, acts as a dust collector below the table.

Preferably the guard moves automatically from below the table to above the table as the table moves from the first position to the second position of the table. In this regard, as disclosed in EP-0586172, a means for moving the table from its first position to its second position in a neat and compact way is described. A saw according to the present invention may use this method without resulting in clashing of the guard with any support structure during movement of the table.

In a preferred embodiment, the guard is carried by a U-shaped support mounted on the table, the axis of the U extending substantially parallel to the plane of the table to accommodate workpieces passing over the table.

The U-shaped support may be retracted for packing or storage. With this in mind, the prong of the U-shaped support not carrying the guard engages a clamp mounted on the table itself. As a result, if the clamp is released, the prong of the support can be passed through the clamp to allow either complete removal of the support from the table or complete entry of the prong of the support through the clamp.

Preferably a quadrilateral linkage between the guard and the U-shaped support ensures that, as the guard rises, the guard remains at substantially the same orientation relative to the table. In this way, a user of the saw is protected against the blade for all positions of the guard.

The quadrilateral linkage may be locked to hold the guard in a desired position relative to the table. With this in mind, if the guard is being used as a dust collector when the saw is being used as a chop saw, it is desirable for the guard to be held firmly against the underside of the table. By locking the quadrilateral linkage, this can be achieved prior to flipping-over of the table.

A quadrilateral linkage may comprise a pair of cables extending along an arm, each cable having a first end attached to a roller at one end of the arm and a second end solidly mounted at the other end of the arm such that, as the guard is raised, the roller rotates to retain the guard in the desired orientation. If this arrangement is used, the quadrilateral linkage is preferably locked by means of a device which squeezes the arm to grip the roller, thereby preventing rotation of the roller.

In the event that a workpiece strikes the guard very hard, an automatic release joint is provided between the guard and the support which allows the guard to swing upwards. As a result, breakage of the guard/support structure is avoided.

Preferably the guard includes an exit for vacuum dust extraction. Dust extraction is important whether the saw is being used as a chop saw or as a bench saw.

Preferably the guard includes a nose portion which, if contacted by a workpiece, forces the guard to rise to expose the saw blade to the workpiece. As mentioned above, however, if the nose portion is struck with too severe a force, the automatic release joint should function.

Specific embodiments of the present invention are now described, by way of example only, with reference to the accompanying drawings, in which:
Figure 1 is a schematic side view of a saw assembly according to the present invention with the table in chop saw mode;
Figure 2 is a schematic side view of the saw of Figure 1, but this time with the table in bench saw mode;
Figure 2A is a plan view of the arm of the quadrilateral linkage shown in the saw of Figure 2;
Figure 3 is a schematic front view of the saw shown in Figure 2 with the table in bench saw mode;
Figure 4 is a schematic side view of a second embodiment of saw according to the present invention with the table in chop saw mode; and
Figure 5 is a schematic side view of the saw of Figure 4, but with the table in bench saw mode.

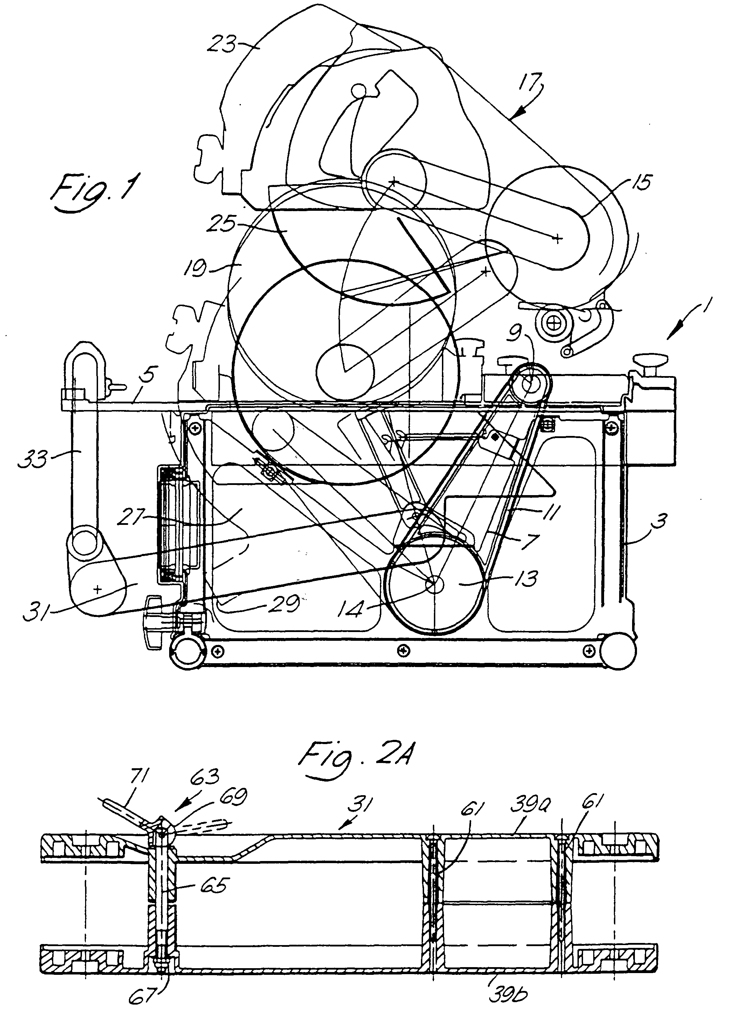

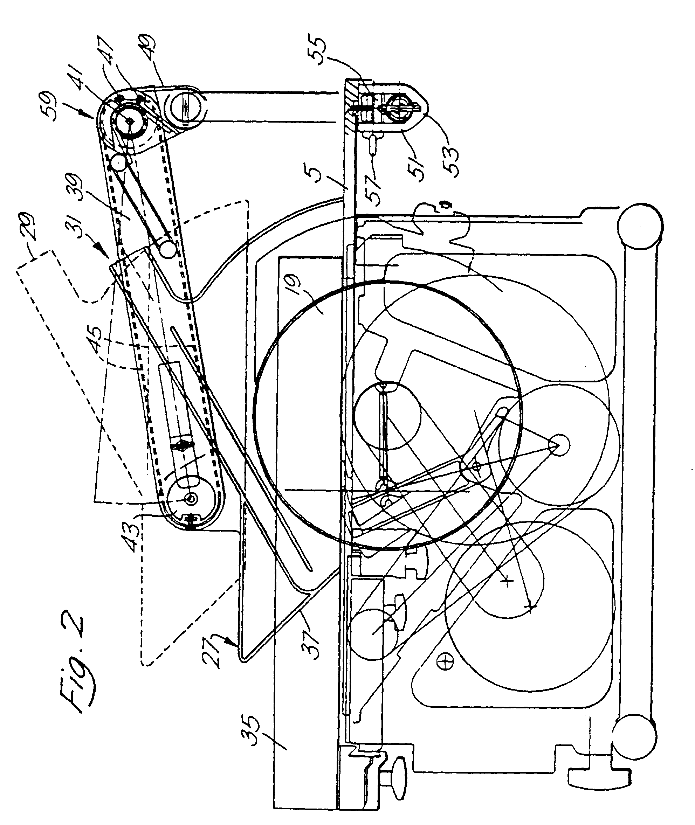

With reference to Figures 1-3 of the drawings, a chop/bench (or table) saw 1 according to the present invention comprises a frame 3 supporting a table 5. The table 5 is connected to the frame 3 through an intermediate member 7 which is pivoted to the frame 3. The table has a first wheel 9 fixed thereto and a belt 11 passes around the first wheel 9 and around a second wheel 13 fixed to the frame 3 around the pivot 14 of the intermediate member 7. Pivoting on the intermediate member 7 relative to the frame 3 rolls the first wheel 9 inside the belt 11 and rotates the table 5 between the chop saw mode (Figure 1) and the bench saw mode (Figure 2). This mode of operation is described in detail in EP-0586172.

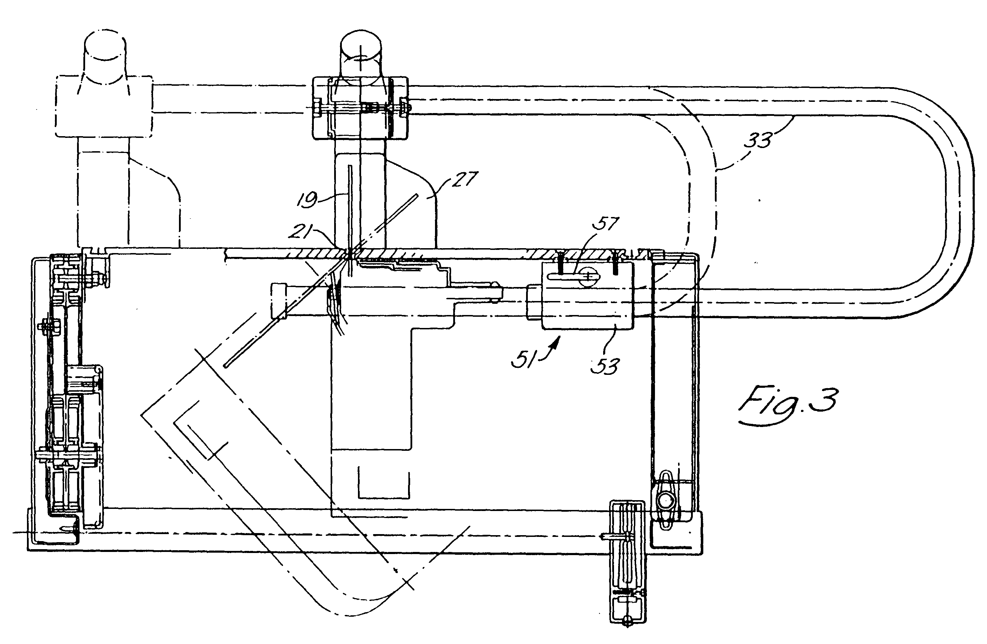

With specific reference to Figure 1, when the saw 1 is in the chop saw mode, a pivot member 15 is positioned on the upper side of the table 5. A saw assembly 17 incorporating a saw blade 19 is pivotally mounted on the pivot member 15 for plunging through a slot 21 (cf. Figure 3) in the table 5 to snip-off pieces of a workpiece positioned on the table 5. As can be seen in Figure 1, an upper guard 23 and a lower guard 25 (which is withdrawn during use of the chop saw) are provided to protect the user of the saw from the spinning blade 19. A spring, not shown, is also provided for urging the saw assembly 17 into its raised position so that a user of the saw does not have to hold the saw assembly 17 away from a workpiece when not cutting.

A guard/dust collector 27 can be seen below the table 5 in Figure 1 and above the table 5 in Figure 2 of the drawings. As will be appreciated, when the saw 1 is being used in chop saw mode, the guard/dust collector 27 is positioned below the table 5 so that debris and dust produced from a workpiece during cutting falls through the slot 21 in the table 5 and into the dust collector 27. An exit 29 from the dust collector 27 may be attached to a suction device (not shown) for removing dust from the saw 1.

The dust collector 27 is held firmly against the underside of the table 5 by means of a quadrilateral linkage 31 and a support 33 which will now be described in detail.

As can be seen from Figure 2 of the drawings, the dust collector/guard 27, quadrilateral linkage 31 and support 33 are all carried by the table 5 when the table 5 is rotated from its chop saw position of Figure 1 to its bench saw position shown in Figure 2. As a result, it is unnecessary for a user of the saw 1 to remove or replace the dust collector/guard 27 when the saw 1 is being changed from one arrangement to the other.

With reference to Figure 2, when the dust collector/guard 27 is positioned above the table 5, the exit 29 can once again be used to remove dust and debris from the vicinity of the saw blade 19, if desired. Further, as a workpiece (not shown) is moved along the table 5 adjacent the fence 35 mounted on the table 5, the workpiece may abut a nose portion 37 of the guard 27. When this occurs, due to the angle of the nose portion 37 as shown in Figure 2, the guard 27 will be urged upwards away from the table 5 to allow the workpiece to move below the guard 27 into contact with the saw blade 19. The quadrilateral linkage 31 ensures that the guard 27 is held in a substantially constant orientation relative to the table 5 so that the guard 27 is at its most effective throughout motion of the guard 27. More particularly, the quadrilateral linkage 31 comprises an arm 39 mounted about a pivot axis 41 and carrying a roller 43 fixed to the guard 27. A pair of cables 45 each have a first end fixed to the roller 43 by means of a bolt or screw which pinches the ends of the cables 45 and a second end fixed to adjustable stops 47 solidly mounted on a bracket 49 attached to the support 33. Hence, if the guard 27 is raised by a workpiece, for example, the cables 45 of the quadrilateral linkage 31 force the roller 43 to rotate anti-clockwise (when viewed in Figure 2), thereby forcing the nose portion 37 of the guard 27 towards the table 5. This results in the guard 27 being held in a substantially constant orientation relative to the table 5, the guard 27 simply being raised.

By virtue of the stops 47 being adjustable, it is possible to set the orientation of the guard 27 during installation, simply by lengthening or shortening the cables 45 as necessary. More particularly, if the upper stop 47 were adjusted to shorten the length of the upper cable 45 whilst the lower stop 47 releases the lower cable 45, the roller 43 will rotate clockwise thereby raising the nose portion 37 of the guard 27.

As can be seen from Figure 3 of the drawings, the support 33 comprises a U-shaped support 33 extending outwardly from the bracket 49 in a direction substantially parallel to the plane of the table 5. The return prong of the U-shaped support 33 engages with a clamp 51 mounted below the table 5 in Figure 2. The clamp 51 includes a cradle 53, a bearing portion 55 and means 57 for tightening the bearing portion 55 against the support 33. Thus, the position of the U-shape support 33 relative to the table 5 can be adjusted, thereby allowing the support 33 to be extended fully, removed from the table altogether or withdrawn fully (as shown in phantom lines in Figure 3) to enable the saw 1 to be packed or stored, for example.

Although not shown in any detail, an automatic release joint 59 is provided on the bracket 49 between the arm 39 of the quadrilateral linkage 31 and the U-shaped support bracket 33. This automatic release joint 59 is included to ensure that no damage is done to the guard 27, quadrilateral linkage 31 or support 33 if a workpiece strikes the guard 27 with a predetermined force. If a workpiece does strike the guard 27 with a significant force, the joint 59 releases automatically to allow the guard 27 to rise rather than remaining stationary and transferring the force to the support structure.

As can be seen in Figure 2A, the arm 39 of the quadrilateral linkage 31 comprises two halves 39a, 39b. The roller 43 (not shown in Figure 2A) is mounted between the two halves 39a, 39b of the arm 39. The two arms 39a, 39b are held together by means of screws 61 towards the support end of the arm 39. As a result, the end of the arm 39 carrying the roller 43 is slightly resilient, thereby allowing the roller 43 to rotate if necessary. A device 63 for squeezing the two halves 39a, 39b of the arm 39 together adjacent the roller 43 is, however, provided to lock the quadrilateral linkage 31. In this regard, the device 63 comprises a shaft or pin 65 straddling the two halves 39a, 39b of the arm 39. One end of the shaft 65 carries a stop 67 in the form of a nut, for example, whilst the other end of the shaft 65 carries an eccentric head 69 pivotally attached to the shaft 65. The eccentric head 69 may be rotated about the pivot on the shaft 65 by means of a handle 71. If the handle 71 is activated, the eccentric head will force one half 39a of the arm 39 into contact with the other half 39b of the arm 39, thereby gripping the roller 43 held by the arm 39. When this occurs, the roller 43 is prevented from rotating, thereby locking the quadrilateral linkage 31.

As will be appreciated, if the guard 27 is to be held above the table 5 a particular amount, for whatever reason, it is simply necessary to raise the guard 27 and to activate the handle 71 of the locking device 63. The guard 27 will then be held in position above the table 5. Further, when the table 5 is to be flipped over from its bench mode to its chop saw mode, the dust collector/guard 27 needs to be held firmly against the table 5 and this can be achieved by lowering the guard 27 into contact with the table 5 and locking the locking device 63 using the handle 71. Thus, when the table 5 is inverted using intermediate member 7, the dust collector/guard 27 is in position below the table 5 for collection of dust or other debris from the slot 21 during chopping of workpieces on the table 5.

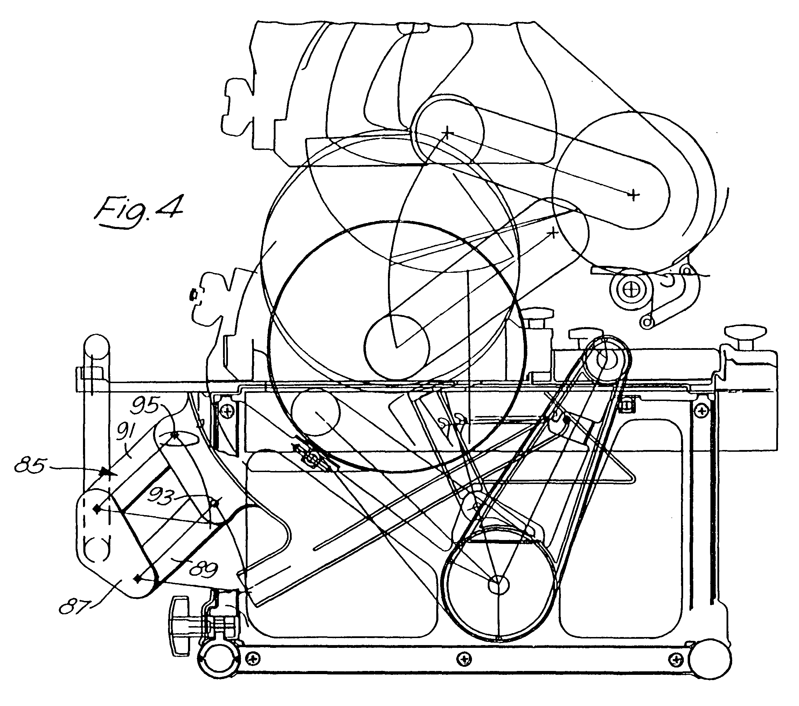

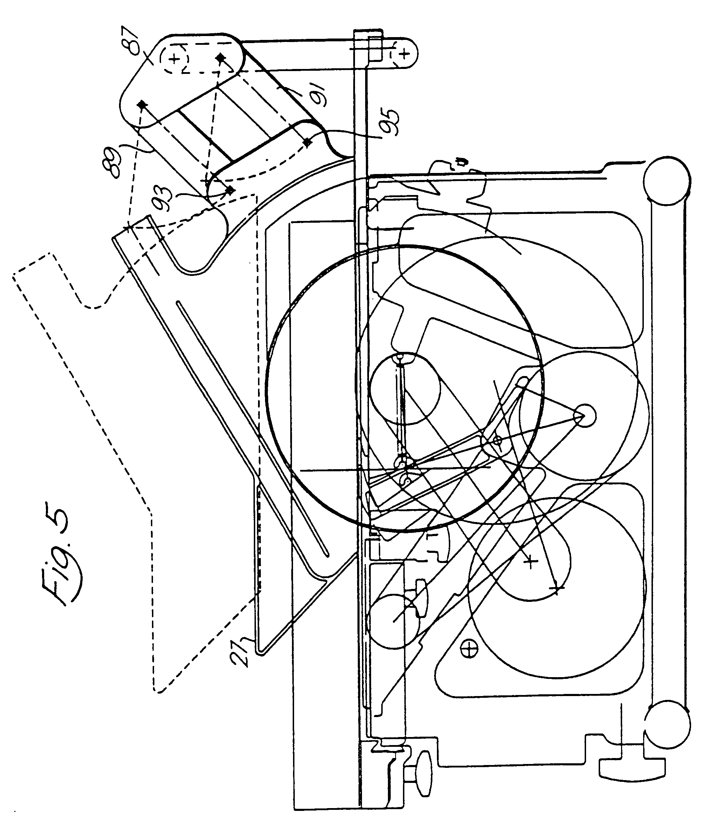

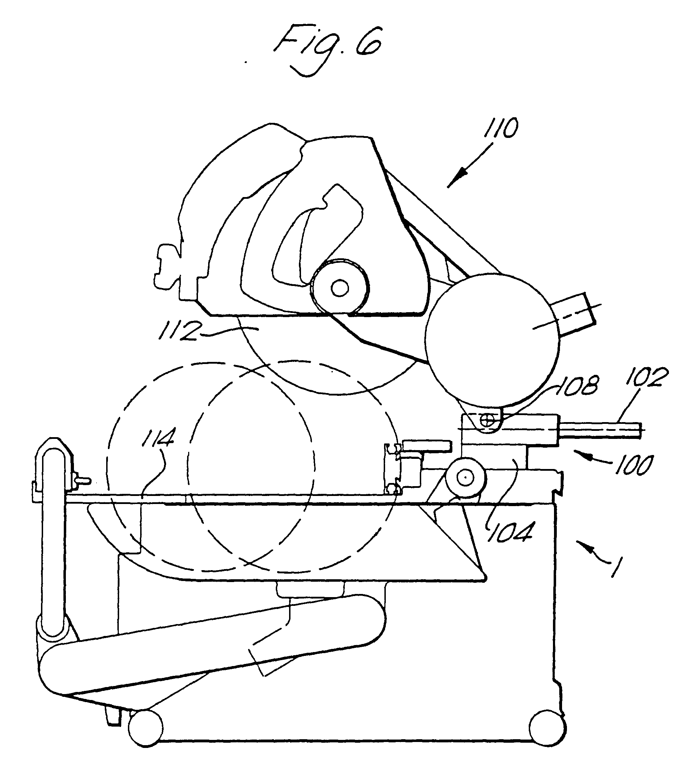

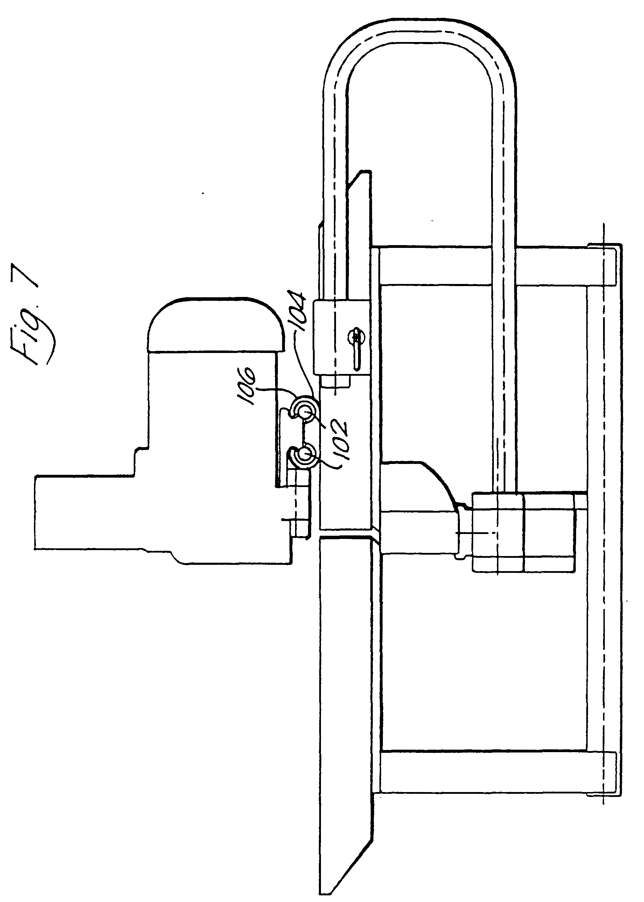

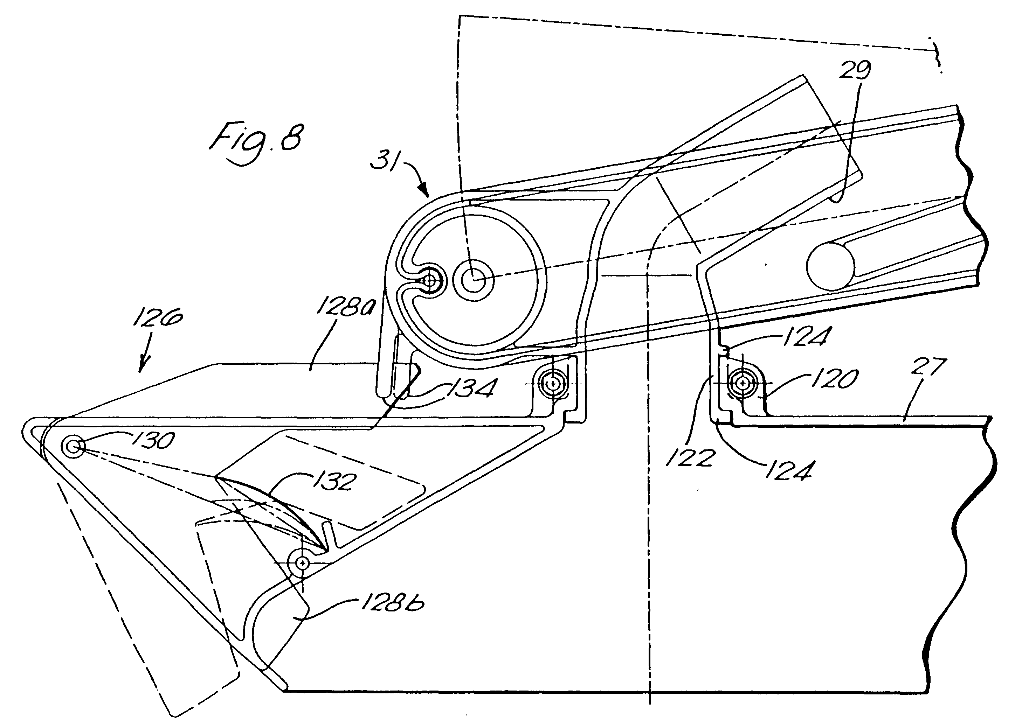

Turning now to Figures 4 and 5 of the accompanying drawings, a second embodiment of saw 1 according to the present invention is shown. Since the saw 1 is essentially the same as the saw of Figures 1-3, the saw will not be described in detail. The only real difference, however, between the two saws 1 is that the quadrilateral linkage 31 of Figures 1-3 has been replaced by a more standard quadrilateral linkage 85, as shown in Figures 4 and 5. Once again, the quadrilateral linkage is arranged to enable the guard 27 to be raised and lowered relative to the table 5 without altering the orientation of the guard 27 relative to the table 5. This is clearly shown in Figure 5 in phantom lines. Further, some form of lock means (not shown) is included in the saw 1 to retain the dust collector/guard 27 firmly against the underside of the table 5 when the saw 1 is being used in the chop saw mode shown in Figure 4. Dust collection and extraction can then be achieved.

As will be seen from Figure 5, the U-shape support 33 carries a bracket 87 upon which two struts 89, 91 are pivotally mounted. The two struts 89, 91 are pivotally attached to the guard 27 such that, as the guard 27 is raised, the pivot points 93, 95 follow the paths shown in phantom lines in Figure 5. As a result, the guard 27 is held in substantially the same orientation whatever its position above the table 5.

## Claims

1. A saw (1) comprising a frame (3), a table (5) mounted in the frame and adapted to adopt two positions, a pivot member (15) on a first side of the table, a saw assembly (17) pivoted with respect to the pivot member, a blade (19) journalled in said assembly, a motor to drive the blade, and a slot (21) in the table through which said blade is adapted to protrude, in a first of said two positions of the table (5) the saw assembly (17) being above the table, the saw (1) thereby forming a chop saw for performing plunge cuts on workpieces supported on said first side of the table, and, in a second of said two positions of the table (5) , the saw assembly (17) being below the table and the saw (1) thereby forming a bench saw for performing cuts on workpieces passed through the blade on a second opposite side of the table, **characterised in that** the saw further comprises a guard (27) which, when the table (5) is in the second of the two positions, protects a user from the blade (19) protruding through the slot (21) and, when the table (5) is in the first of the two positions, acts as a dust collector below the table.

2. A saw as claimed in claim 1, **characterised in that** the guard (27) moves automatically from below the table (5) to above the table as the table moves from the first position to the second position of the table.

3. A saw as claimed in claim 1 or claim 2, **characterised in that** the guard (27) is carried by a U-shaped support (33) mounted on the table (5), the axis of the U extending substantially parallel to the plane of the table to accommodate workpieces passing over the table.

4. A saw as claimed in claim 3, **characterised in that** in the U-shaped support (33) can be retracted for packing or storage.

5. A saw as claimed in claim 3 or claim 4, **characterised in that** a quadrilateral linkage (31) between the guard (27) and the U-shaped support (33) ensures that, as the guard rises, the guard remains at substantially the same orientation relative to the table (5).

6. A saw as claimed in claim 5, **characterised in that** the quadrilateral linkage (31) can be locked to hold the guard (27) in a desired position relative to the table (5).

7. A saw as claimed in claim 5 or claim 6, **characterised in that** the quadrilateral linkage (31) comprises a pair of cables (45) extending along an arm (39), each cable having a first end attached to a roller (43) at one end of the arm and a second end solidly mounted at the other end of the arm, such that, as the guard (27) is raised, the roller rotates to retain the guard in the desired orientation.

8. A saw as claimed in claim 7, **characterised in that** the quadrilateral linkage (31) is locked by means of a device (63) which squeezes the arm (39) to grip the roller (43), thereby preventing rotation of the roller.

9. A saw as claimed in any preceding claim, **characterised in that** an automatic release joint (59) is provided for the guard (27) so that the guard can swing upwards if a workpiece strikes the guard with a predetermined force.

10. A saw as claimed in any preceding claim, **characterised in that** the guard (27) includes an exit (29) for vacuum dust extraction.

11. A saw as claimed in any preceding claim, **characterised in that** the guard (27) includes a nose portion (37) which, if contacted by a workpiece, forces the guard to rise to expose the saw blade to the workpiece.

## Patentansprüche

1. Säge (1) mit einem Rahmen (3), einem Tisch (5), der in dem Rahmen montiert und dazu ausgestaltet ist, um zwei Position einzunehmen, einem Schwenkbauteil (15) an einer ersten Seite des Tisches, einer Sägebaugruppe (17), die bezüglich des Schwenkbauteils verschwenkt wird, einem Sägeblatt (19), das in der Baugruppe gelagert ist, einem Motor, um das Sägeblatt anzutreiben, und einem Schlitz (21) in dem Tisch, wobei das Sägeblatt dazu eingerichtet ist, um durch diesen hindurchzuragen, wobei sich die Sägebaugruppe (17) in einer ersten der beiden Positionen des Tisches (5) über dem Tisch befindet und die Säge (1) dadurch eine Kappsäge bildet, um Eintauchschnitte an Werkstücken durchzuführen, die auf der ersten Seite des Tisches abstützend gehalten sind, und wobei sich die Sägebaugruppe (17) in einer zweiten der beiden Positionen des Tisches (5) unter dem Tisch befindet und die Säge (1) dadurch eine Tischsäge bildet, um Schnitte an Werkstücken durchzuführen, die an der zweiten gegenüberliegenden Seite des Tisches durch das Sägeblatt geführt werden, **dadurch gekennzeichnet, daß** die Säge außerdem eine Schutzhaube (27) aufweist, die dann, wenn sich der Tisch (5) in der zweiten der beiden Positionen befindet, einen Benutzer vor dem Sägeblatt (19) schützt, das durch den Schlitz (21) hindurchragt, und dann, wenn sich der Tisch (5) in der ersten der beiden Positionen befindet, als eine Staubsammeleinrichtung unter dem Tisch dient.

2. Säge nach Anspruch 1, **dadurch gekennzeichnet, daß** sich die Schutzhaube (27) automatisch von der Unterseite des Tisches (5) zur Oberseite des Tisches bewegt, wenn der Tisch von der ersten Position in die zweite Position des Tisches bewegt wird.

3. Säge nach Anspruch 1 oder Anspruch 2, **dadurch gekennzeichnet, daß** die Schutzhaube (27) durch eine U-förmige Abstützung (33) gehalten ist, die an dem Tisch (5) montiert ist, wobei sich die Achse von dem U im wesentlichen parallel zu der Ebene des Tisches erstreckt, um Werkstücke aufzunehmen, die über den Tisch geführt werden.

4. Säge nach Anspruch 3, **dadurch gekennzeichnet, daß** die U-förmige Abstützung (33) zum Verpacken oder zur Lagerung zurückgeschoben werden kann.

5. Säge nach Anspruch 3 oder Anspruch 4, **dadurch gekennzeichnet, daß** durch eine vierseitige Verbindung (31) zwischen der Schutzhaube (27) und der U-förmigen Abstützung (33) gewährleistet wird, daß die Schutzhaube dann, wenn die Schutzhaube angehoben wird, relativ zu dem Tisch (5) in im wesentlichen der gleichen Ausrichtung verbleibt.

6. Säge nach Anspruch 5, **dadurch gekennzeichnet, daß** die die vierseitige Verbindung (31) arretiert werden kann, um die Schutzhaube (27) relativ zu dem Tisch (5) in einer gewünschten Postition zu halten.

7. Säge nach Anspruch 5 oder Anspruch 6, **dadurch gekennzeichnet, daß** die vierseitige Vebindung (31) ein Paar Drähte (45) aufweist, die entlang eines Armes (39) verlaufen, wobei jeder Draht ein erstes Ende, das an einer Rolle (43) an einem Ende von dem Arm angebracht ist, und ein zweites Ende hat, das fest an dem anderen Ende von dem Arm montiert ist, so daß dann, wenn die Schutzhaube (27) angehoben wird, sich die Rolle dreht, um die Schutzhaube in der gewünschten Ausrichtung zu halten.

8. Säge nach Ansprüch 7, **dadurch gekennzeichnet, daß** die vierseitige Verbindung (31) mit Hilfe einer Einrichtung (63) arretiert wird, durch die der Arm (39) zusammengedrückt wird, um die Rolle (43) einzuklemmen, um dadurch ein Verdrehen der Rolle zu verhindern.

9. Säge nach einem der vorhergehenden Ansprüche, **dadurch gekennzeichnet, daß** eine automatische Freigabeverbindung (59) für die Schutzhaube (27) vorgesehen ist, so daß die Schutzhaube nach oben schwenken kann, wenn ein Werkstück mit einer vorbestimmten Kraft gegen die Schutzhaube stößt.

10. Säge nach einem der vorhergehenden Ansprüche, **dadurch gekennzeichnet, daß** die Schutzhaube (27) einen Ausgang (29) für die Staubabsaugung aufweist.

11. Säge nach einem der vorhergehenden Ansprüche, **dadurch gekennzeichnet, daß** die Schutzhaube (27) einen Nasenbereich (37) hat, der dann, wenn er mit einem Werkstück in Kontakt kommt, die Schutzhaube zum Anheben zwingt, um das Sägeblatt für das Werkstück freizugeben.

## Revendications

1. Une scie (1) comprenant un bâti (3), une table (5) montée dans le bâti et agencée de façon à pouvoir occuper deux positions, un organe formant pivot (15) disposé sur un premier côté de la table, un ensemble de scie (17) monté pivotant par rapport à l'organe formant pivot, une lame (19) montée à rotation dans ledit ensemble, un moteur servant à entraîner la lame, et une fente (21) formée dans la table à travers laquelle ladite lame peut faire saillie, dans une première desdites deux positions de la table (5), l'ensemble de scie (17) étant disposé au-dessus de la table, la scie (1) formant, de ce fait, une scie à tronçonner pour effectuer des coupes plongeantes sur des pièces portées sur ledit premier côté de la table, et, dans une seconde desdites deux positions de la table (5), l'ensemble de scie (17) étant disposé au-dessous de la table et la scie (1) formant, de ce fait, une scie d'établi pour effectuer des coupes sur des pièces déplacées de façon que la lame les traverse sur un second côté opposé de la table, **caractérisé en ce que** la scie comporte, en outre, un carter de protection (27) qui, lorsque la table (5) est dans la seconde des deux positions, protège un utilisateur de la lame (19) qui fait saillie à travers la fente (21) et, lorsque la table (5) est dans la première des deux positions, sert de collecteur de sciure au-dessous de la table.

2. Une scie telle que revendiquée dans la revendication 1, **caractérisée en ce que** le carter de protection (27) se déplace automatiquement de dessous la table (5) jusqu'au-dessus de la table lorsque la table se déplace de la première position jusqu'à la seconde position de la table.

3. Une scie telle que revendiquée dans la revendication 1 ou la revendication 2, **caractérisée en ce que** le carter de protection (27) est porté par un support en forme de U (33) monté sur la table (5), l'axe du U s'étendant sensiblement parallèlement au plan de la table pour permettre le passage de pièces se déplaçant sur la table.

4. Une scie telle que revendiquée dans la revendication 3, **caractérisée en ce que** le support en forme de U (33) peut être rétracté pour l'empaquetage ou pour l'entreposage.

5. Une scie telle que revendiquée dans la revendication 3 ou la revendication 4, **caractérisée en ce qu'**une tringlerie quadrilatérale (31) entre le carter de protection (27) et le support en forme de U (31) assure que, lorsque le carter de protection se soulève, le carter de protection reste sensiblement dans la même orientation par rapport à la table (5).

6. Une scie telle que revendiquée dans la revendication 5, **caractérisée en ce que** la tringlerie quadrilatérale (31) peut être verrouillée pour retenir le carter de protection (27) dans une position désirée par rapport à la table (5).

7. Une scie telle que revendiquée dans la revendication 5 ou la revendication 6, **caractérisée en ce que** la tringlerie quadrilatérale (31) comporte une paire de câbles (45) s'étendant le long d'un bras (39), chaque câble comprenant une première extrémité fixée à un galet (43) disposé à une extrémité du bras et une seconde extrémité montée solidaire de l'autre extrémité du bras de telle sorte que, lorsque le carter de protection (27) est soulevé, le galet tourne pour maintenir le carter de protection dans l'orientation désirée.

8. Une scie telle que revendiquée dans la revendication 7, **caractérisée en ce que** la tringlerie quadrilatérale (31) est verrouillée au moyen d'un dispositif (63) qui presse le bras (39) pour serrer le galet (43), empêchant, de ce fait, la rotation du galet.

9. Une scie telle que revendiquée dans une quelconque revendication précédente, **caractérisée en ce qu'**il est prévu un joint (59) de déblocage automatique du carter de protection (27) de sorte que le carter de protection peut basculer vers le haut si une pièce heurte le carter de protection avec une force prédéterminée.

10. Une scie telle que revendiquée dans une quelconque revendication précédente, **caractérisée en ce que** le carter de protection (27) comporte un organe d'évacuation (29) pour l'extraction par aspiration de la sciure.

11. Une scie telle que revendiquée dans une quelconque revendication précédente, **caractérisée en ce que** le carter de protection (27) comporte une partie de nez (37) qui, si une pièce entre en contact avec elle provoque le soulèvement du carter de protection de façon à exposer la lame de scie à la pièce.
